# EUROPEAN PATENT APPLICATION

(11) **EP 3 305 702 A1**
(43) Date of publication of application: **11.04.2018**
(21) Application number: 16802936.1
(22) Date of filing: 19.04.2016
(51) Int. Cl.: B65H 67/06, B65H 54/22, D01H 13/00, D01H 13/14, G05B 19/418

(54) **YARN WINDING SYSTEM, AUTOMATIC WINDER, FINE SPINNING MACHINE, AND YARN WINDING METHOD**

(30) Priority: 05.06.2015 JP 2015115217
(71) Applicant: Murata Machinery, Ltd., Kyoto-shi, Kyoto 601-8326 (JP)
(72) Inventor: HIRANO Keiji, Kyoto-shi Kyoto 612-8686 (JP)
(74) Representative: Stöckeler, Ferdinand
(86) International application number: PCT/JP2016/062372
(87) International publication number: WO 2016/194499

(57) **Abstract**

A yarn winding system 1 includes: a spinning frame 3 that forms a yarn feeding bobbin 11; and an automatic winder 4 that winds yarn from the yarn feeding bobbin 11 and forms a package. The spinning frame 3 includes a control device 31 that controls operation of the spinning frame 3. The automatic winder 4 includes a control device 41 that controls operation of the automatic winder 4. A display unit 31a and an operation unit 31b of the control device 31 are capable of performing display or operation related to a function of a device placed under control of the control device 41.

## Description

### Technical Field

The present invention relates to a yarn winding system, an automatic winder, a spinning frame, and a yarn winding method.

### Background Art

A yarn winding system including : a spinning frame including a plurality of spinning units, each of spinning units that forms a yarn feeding bobbin; and an automatic winder including a plurality of winder units, each of winder units that winds yarn from the yarn feeding bobbin and forms a package has been known (see Patent Literature 1, for example). In this yarn winding system, the spinning units and the winder units may be aligned in a row in a predetermined direction.

### Citation List

### Patent Literature

[Patent Literature 1] European Patent Application Publication No. 2080825

### Summary of Invention

### Technical Problem

In the yarn winding system described above, for example, when an interface unit of a control device that controls operation of the automatic winder is disposed on one side of the winder units in the predetermined direction, it is difficult for an operator to immediately access the interface unit of the control device if the operator is positioned on the other side of the winder units in the predetermined direction. Thus, for example, if some malfunction occurs in a winder unit, recovery may be delayed, and consequently the operating efficiency of the yarn winding system may decrease. In consideration of convenience of an operator, a plurality of interface units can be provided to both sides of the winder units, but which may increase costs.

In view of this, various aspects of the present invention aim to provide a yarn winding system, an automatic winder, a spinning frame, and a yarn winding method that can prevent operating efficiency from decreasing and can prevent costs from increasing.

### Solution to Problem

A yarn winding system according to one aspect of the present invention is a yarn winding system including a spinning frame that forms a yarn feeding bobbin and an automatic winder that winds yarn from the yarn feeding bobbin and forms a package. The spinning frame includes a first control device that controls operation of the spinning frame, and the automatic winder includes a second control device that controls operation of the automatic winder. A first interface unit of the first control device is capable of performing display or operation related to a function of a second device placed under control of the second control device.

In this yarn winding system, an operator can check the display related to the function of the second device placed under the control of the second control device and can perform the operation related to the function of the second device by accessing the first interface unit of the first control device. This shortens the operator's movement path, and consequently can prevent operating efficiency of the yarn winding system from decreasing. This also eliminates the need of additionally providing a dedicated interface unit, and thus costs can be prevented from increasing.

In the yarn winding system, a second interface unit of the second control device may be capable of performing display or operation related to a function of a first device placed under control of the first control device. By this configuration, the operator can check the display related to the function of the first device placed under the control of the first control device and can perform the operation related to the function of the first device by accessing the second interface unit of the second control device.

In the yarn winding system, the display related to the function of the second device may include display for providing notification of a type of a malfunction that has occurred in the second device, and the display related to the function of the first device may include display for providing notification of a type of a malfunction that has occurred in the first device. By this configuration, it is possible to notify the operator of the type of a malfunction that has occurred in the first device or the second device while preventing the operator's movement path from becoming longer.

In the yarn winding system, the operation related to the function of the second device may include operation for clearing notification of a malfunction that has occurred in the second device, and the operation related to the function of the first device may include operation for clearing notification of a malfunction that has occurred in the first device. By this configuration, it is possible to allow the operator to clear the notification of a malfunction that has occurred in the first device or the second device while preventing the operator's movement path from becoming longer.

In the yarn winding system, the second device may include a bobbin transfer device that transfers the yarn feeding bobbin from the spinning frame to the automatic winder. By this configuration, the operator can check the display related to the function of the bobbin transfer device placed under the control of the second control device and can perform the operation related to the function of the bobbin transfer device by accessing the first interface unit of the first control device.

In the yarn winding system, the spinning frame may further include a plurality of spinning units, each of spinning units that forms the yarn feeding bobbin, and the automatic winder may further include a plurality of winder units, each of winder units that winds yarn from the yarn feeding bobbin and forms a package. The spinning units may be aligned in a row in a predetermined direction, and the winder units may be aligned in a row in the predetermined direction on one side with respect to the spinning units in the predetermined direction. The first interface unit may be disposed between the spinning units and the winder units, and the second interface unit may be disposed on a side opposite to the spinning units in the predetermined direction with respect to the winder units. By this configuration, when the second device placed under the control of the second control device is disposed between the spinning units and the winder units, the operator can check the display related to the function of the second device and can perform the operation related to the function of the second device by accessing the first interface unit of the first control device disposed between the spinning units and the winder units. Thus, the operator's movement path can be prevented from becoming longer in such a case.

A yarn winding system according to one aspect of the present invention is a yarn winding system including a spinning frame that forms a yarn feeding bobbin and an automatic winder that winds yarn from the yarn feeding bobbin and forms a package. The spinning frame includes a first control device that controls operation of the spinning frame, and the automatic winder includes a second control device that controls operation of the automatic winder. A second interface unit of the second control device is capable of performing display or operation related to a function of a first device placed under control of the first control device.

An automatic winder according to one aspect of the present invention is an automatic winder that winds yarn from a yarn feeding bobbin supplied from a spinning frame and forms a package, and includes a second control device that controls operation of the automatic winder. A second interface unit of the second control device is capable of performing display or operation related to a function of a first device placed under control of a first control device that controls operation of the spinning frame.

A spinning frame according to one aspect of the present invention is a spinning frame that forms a yarn feeding bobbin to be supplied to an automatic winder, and includes a first control device that controls operation of the spinning frame. A first interface unit of the first control device is capable of performing display or operation related to a function of a second device placed under control of a second control device that controls operation of the automatic winder.

A yarn winding method according to one aspect of the present invention is a yarn winding method that is performed in a yarn winding system including a spinning frame that forms a yarn feeding bobbin and an automatic winder that winds yarn from the yarn feeding bobbin and forms a package. The yarn winding method includes a step of causing a first interface unit of a first control device that controls operation of the spinning frame to perform display or operation related to a function of a second device placed under control of a second control device that controls operation of the automatic winder.

The yarn winding method may further include a step of causing a second interface unit of the second control device to perform display or operation related to a function of a first device placed under control of the first control device.

A yarn winding method according to one aspect of the present invention is a yarn winding method that is performed in a yarn winding system including a spinning frame that forms a yarn feeding bobbin and an automatic winder that winds yarn from the yarn feeding bobbin and forms a package. The yarn winding method includes a step of causing a second interface unit of a second control device that controls operation of the automatic winder to perform display or operation related to a function of a first device placed under control of a first control device that controls operation of the spinning frame.

With the yarn winding system, the automatic winder, the spinning frame, and the yarn winding method above, because of the reasons described above, the operating efficiency of the yarn winding systems can be prevented from decreasing and costs can be prevented from increasing.

### Advantageous Effects of Invention

According to one aspect of the present invention, it is possible to provide a yarn winding system, an automatic winder, a spinning frame, a yarn winding method that can prevent operating efficiency from decreasing and can prevent costs from increasing.

### Brief Description of Drawings

FIG. 1 is a front view of a yarn winding system according to one embodiment.
FIG. 2 is a perspective view of trays, empty bobbins, and a yarn feeding bobbin that are conveyed in the yarn winding system in FIG. 1.
FIG. 3 is a side view of a spinning unit of the yarn winding system in FIG. 1.
FIG. 4 is a side view of a winder unit of the yarn winding system in FIG. 1.

### Description of Embodiments

One embodiment will now be described in detail with reference to the drawings. In the drawings, like or equivalent elements are designated by like numerals, and duplicate description is omitted.

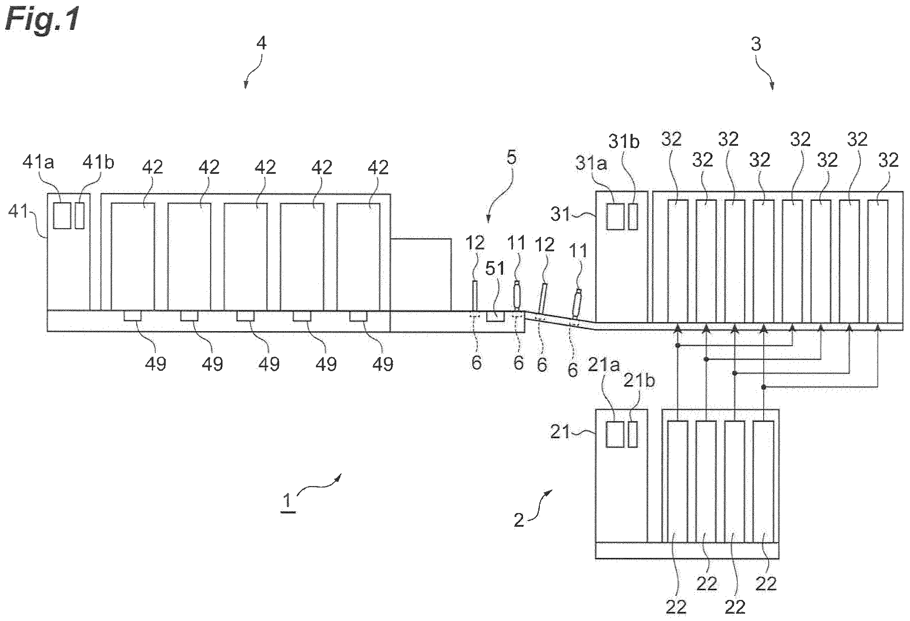

As depicted in FIG. 1, a yarn winding system 1 includes a roving frame 2, a spinning frame 3, an automatic winder 4, and a bobbin transfer device 5. The roving frame 2 generates roved yarn from a sliver, winds the roved yarn, and forms a roved yarn bobbin. The spinning frame 3 generates yarn from the roved yarn, winds the yarn, and forms a yarn feeding bobbin 11. The automatic winder 4 winds the yarn from the yarn feeding bobbin 11 and forms a package. The bobbin transfer device 5 transfers the yarn feeding bobbin 11 from the spinning frame 3 to the automatic winder 4, and transfers an empty bobbin 12 (bobbin around which yarn is not wound) from the automatic winder 4 to the spinning frame 3. The bobbin transfer device 5 is provided with a bobbin preparation device and a residual yarn processing device, for example. The bobbin preparation device performs preliminary preparation for the automatic winder 4 to process the yarn of the yarn feeding bobbin 11. When yarn remains on the bobbin 12 that has been discharged from the yarn feeding bobbin 11, the residual yarn processing device removes the yarn and forms an empty bobbin 12. For this purpose, the bobbin transfer device 5 has a complicated transfer path having many curves.

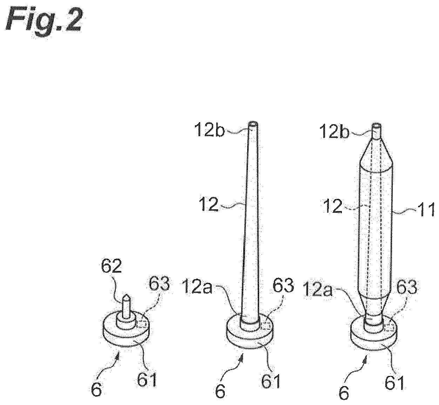

The yarn feeding bobbin 11 and the empty bobbin 12 are each transferred in a manner being set on a tray 6. As depicted in FIG. 2, each of the trays 6 has a disk-like base portion 61, a pin 62 protruding upward from the base portion 61, and an RF (Radio Frequency) tag 63 embedded in the base portion 61. The pin 62 is inserted into the bottom portion 12a of each of the bobbins 12, whereby the yarn feeding bobbin 11 and the empty bobbin 12 are set on the respective trays 6 with the top portions 12b of the bobbins 12 facing upward. The RF tag 63 stores therein information on the yarn feeding bobbin 11 set on the tray 6. In the yarn winding system 1, the status of the yarn feeding bobbin 11 set on the tray 6 is managed by an RFID (Radio Frequency Identification: individual identification using radio waves) technology.

As depicted in FIG. 1, the roving frame 2 includes a control device 21 that controls operation of the roving frame 2 and a plurality of roving units 22, each of roving units 22 that forms a roved yarn bobbin. The control device 21 includes a display unit 21a such as a display and an operation unit 21b such as input keys. The display unit 21a displays, for example, an operating status of each roving unit 22. The operation unit 21b is a part for an operator to set operating conditions, for example, of each roving unit 22.

The spinning frame 3 includes a control device 31 that controls operation of the spinning frame 3 and a plurality of spinning units 32, each of spinning units 32 that forms a yarn feeding bobbin 11. The control device 31 includes a display unit 31a such as a display and an operation unit 31b such as input keys. The display unit 31a displays, for example, an operating status of each of the spinning units 32. The operation unit 31b is a part for the operator to set operating conditions, for example, of each of the spinning units 32.

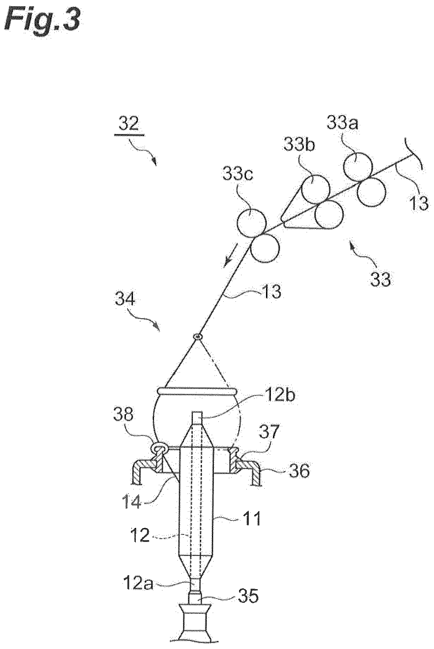

As depicted in FIG. 3, each of the spinning units 32 includes a drafting device 33 and a twisting device 34.

The drafting device 33 includes a back roller pair 33a, a middle roller pair 33b, and a front roller pair 33c. Each pair of the back roller pair 33a, the middle roller pair 33b, and the front roller pair 33c are configured with a bottom roller and a top roller. Around the rollers constituting the middle roller pair 33b, apron belts are each wound. In the drafting device 33, the back roller pair 33a, the middle roller pair 33b, and the front roller pair 33c are rotated at a predetermined speed ratio, whereby a roved yarn 13 that has been unwound from a roved yarn bobbin is drafted.

The twisting device 34 includes a spindle shaft 35, a ring rail 36, a ring 37, and a traveller 38. The spindle shaft 35 holds the bottom portion 12a of a bobbin 12 with the top portion 12b of the bobbin 12 facing upward, and rotates the bobbin 12. The ring rail 36 is movable in the axial direction of the bobbin 12. The ring 37 is fixed to the ring rail 36. The traveller 38 is supported by the ring 37, and is movable along the ring 37.

In the twisting device 34, roved yarn 13 that has been drafted by the drafting device 33 is inserted into a space between the ring 37 and the traveller 38, and an end portion of the roved yarn 13 is fixed to the bobbin 12. In this state, when the spindle shaft 35 rotates the bobbin 12, the traveller 38 moves along the ring 37 in a manner being pulled by the roved yarn 13. At this time, the ring rail 36 gradually moves from the bottom portion 12a side to the top portion 12b side while reciprocating within a predetermined range along the axial direction of the bobbin 12. In the twisting device 34, rotation of the traveller 38 lags behind rotation of the bobbin 12, whereby the roved yarn 13 is twisted and yarn 14 is formed, and the yarn 14 is wound around the bobbin 12 and a yarn feeding bobbin 11 is formed.

The spinning frame 3 including the spinning units 32 each configured as described above is of what is called a simultaneous doffing type. Specifically, the spinning frame 3 stocks a plurality of empty bobbins 12 transferred from the automatic winder 4 by the bobbin transfer device 5, simultaneously sets the empty bobbins 12 on the respective spinning units 32, and simultaneously starts yarn winding. When winding of yarn has been completed in the respective spinning units 32 and yarn feeding bobbins 11 have been formed, the spinning frame 3 simultaneously doffs all of the yarn feeding bobbins 11. Subsequently, the spinning frame 3 pulls empty bobbins 12 that have been already stocked out of the corresponding trays 6 and simultaneously sets the empty bobbins on the respective spinning units 32 again and, instead, simultaneously sets the doffed yarn feeding bobbins 11 on the trays 6.

As depicted in FIG. 1, the automatic winder 4 includes a control device 41 that controls operation of the automatic winder 4 and a plurality of winder units 42, each of winder units 42 that forms a package. The control device 41 includes a display unit 41a such as a display and an operation unit 41b such as input keys. The display unit 41a displays, for example, an operating status of each of the winder units 42. The operation unit 41b is a part for the operator to set operating conditions, for example, of each of the winder units 42. The control device 41 also controls operation of the bobbin transfer device 5.

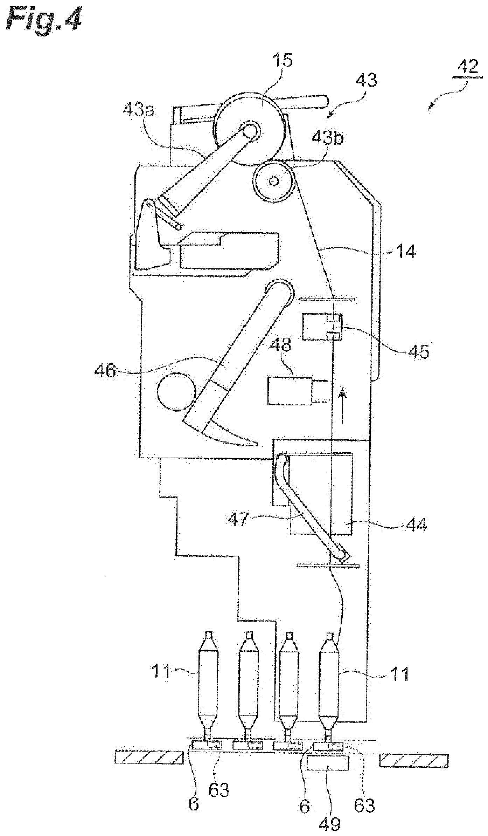

As depicted in FIG. 4, each of the winder units 42 includes a winding device 43, a tension applying device 44, a yarn monitoring device 45, an upper yarn catching device 46, a lower yarn catching device 47, and a splicing device 48.

The winding device 43 includes a cradle 43a and a winding drum 43b. The cradle 43a supports a package 15. The winding drum 43b rotates the package 15 while traversing the yarn 14. Thus, the yarn 14 is wound from a yarn feeding bobbin 11 set at a predetermined position and the package 15 is formed. The tension applying device 44 applies a predetermined tension to the yarn 14 that is travelling from the yarn feeding bobbin 11 to the package 15.

The yarn monitoring device 45 monitors the travelling yarn 14 to detect a yarn defect (thickness abnormality of yarn 14, mixing of foreign matter into yarn 14, etc.). When a yarn defect has been detected, the yarn 14 is cut by a cutter separately provided. When the yarn 14 has been cut, the upper yarn catching device 46 catches a yarn end of the yarn 14 on the package 15 side, and guides the yarn end to the splicing device 48. When the yarn 14 has been cut, the lower yarn catching device 47 catches a yarn end of the yarn 14 on the yarn feeding bobbin 11 side, and guides the yarn end to the splicing device 48. The splicing device 48 splices the yarn ends that have been guided by the upper yarn catching device 46 and the lower yarn catching device 47 to each other.

As depicted in FIG. 1, the bobbin transfer device 5 includes an RF writer 51. When a yarn feeding bobbin 11 is transferred from the spinning frame 3 to the automatic winder 4, the RF writer 51 writes information on the yarn feeding bobbin 11 on the RF tag 63 of a tray 6 on which the yarn feeding bobbin 11 is set. The information on the yarn feeding bobbin 11 includes unit identification information for identifying a spinning unit 32 that has formed the yarn feeding bobbin 11 and doffing information for identifying timing of simultaneous doffing. The RF writer 51 may be provided to an exit of the spinning frame 3 in the transfer direction of the yarn feeding bobbin 11. Alternatively, the RF writer 51 may be provided to every spinning unit 32.

When the yarn feeding bobbin 11 has been set on a winder unit 42 of the automatic winder 4, the information written on the RF tag 63 by the RF writer 51 is read by an RF reader 49 provided to each of the winder units 42, and is transmitted to the control device 41 of the automatic winder 4. Based on this information, the control device 41 can identify the spinning unit 32 that has formed the yarn feeding bobbin 11 and the timing of simultaneous doffing for the yarn feeding bobbin 11 set on the winder unit 42.

As depicted in FIG. 1, in the yarn winding system 1, the spinning frame 3, the bobbin transfer device (second device) 5, and the automatic winder 4 are aligned in this order in a row in a predetermined direction ("predetermined direction" used below means the same direction in every case). In the spinning frame 3, the spinning units (first device) 32 are aligned in a row in the predetermined direction, and the control device (first control device) 31 is disposed on one end portion (end portion on the automatic winder 4 side) of the spinning frame 3 in the predetermined direction. In the automatic winder 4, the winder units (second device) 42 are aligned in a row in the predetermined direction, and the control device (second control device) 41 is disposed on one end portion (end portion on a side opposite to the spinning frame 3) of the automatic winder 4 in the predetermined direction.

Specifically, in the yarn winding system 1, the spinning units 32 are aligned in a row in the predetermined direction, and the winder units 42 are aligned in a row in the predetermined direction on one side in the predetermined direction with respect to the spinning units 32. The display unit 31a and the operation unit 31b that constitute a first interface unit of the control device 31 are disposed between the spinning units 32 and the winder units 42, more specifically between the spinning units 32 and the bobbin transfer device 5. The display unit 41a and the operation unit 41b that constitute a second interface unit of the control device 41 are disposed on a side opposite to the spinning units 32 in the predetermined direction with respect to the winder units 42. The interface units herein are man-machine interface units that allow therethrough the operator to check operating statuses of various devices and to set operating conditions of the various devices.

The display unit 31a and the operation unit 31b of the control device 31 of the spinning frame 3 can perform display or operation related to functions of the bobbin transfer device 5 and the winder units 42 placed under control of the control device 41 of the automatic winder 4. The display related to the function of the bobbin transfer device 5 includes display for providing notification of the type of a malfunction that has occurred in the bobbin transfer device 5. The display related to the function of each of the winder units 42 includes display for providing notification of the type of a malfunction that has occurred in the winder unit 42. The operation related to the function of the bobbin transfer device 5 includes operation for clearing the notification of a malfunction that has occurred in the bobbin transfer device 5. The operation related to the function of the winder unit 42 includes operation for clearing the notification of a malfunction that has occurred in the winder unit 42. As described above, in the yarn winding system 1, a step of causing the display unit 31a and the operation unit 31b of the control device 31 to perform display or operation related to functions of the bobbin transfer device 5 and the winder units 42 placed under the control of the control device 41 is performed.

Examples of a malfunction in the bobbin transfer device 5 include conveyor operation failure that is caused by twine of residual yarn remaining on a yarn feeding bobbin 11 discharged from the winder unit 42 into a conveyor for transfer. A location in the conveyor where the operation failure has occurred can be identified. In other words, the type of a malfunction that has occurred in the bobbin transfer device 5 includes information for identifying the location where the malfunction has occurred.

For example, using the display unit 31a and the operation unit 31b of the control device 31 of the spinning frame 3, the operator can clear an alarm generated in the spinning frame 3, and also can clear an alarm generated in the automatic winder 4 or the bobbin transfer device 5. Furthermore, using the display unit 31a and the operation unit 31b of the control device 31 of the spinning frame 3, the operator can set operating conditions of the spinning frame 3, and also can set operating conditions of the automatic winder 4 or the bobbin transfer device 5. As specific examples, using the display unit 31a and the operation unit 31b of the control device 31 of the spinning frame 3, the operator can set a winding speed, turn on/off each unit, set a blower, and reset an alarm in the automatic winder 4. When the automatic winder 4 has enough operating capacity, the operator can increase the spinning speed in the spinning frame 3, for example.

The display unit 41a and the operation unit 41b of the control device 41 of the automatic winder 4 can perform display or operation related to functions of the spinning units 32 placed under control of the control device 31 of the spinning frame 3. The display related to the functions of the spinning units 32 include display for providing notification of the type of a malfunction that has occurred in the spinning units 32. The operation related to the functions of the spinning units 32 includes operation for clearing the notification of a malfunction that has occurred in the spinning units 32. As described above, in the yarn winding system 1, a step of causing the display unit 41a and the operation unit 41b of the control device 41 to perform display or operation related to functions of the spinning units 32 placed under the control of the control device 31 is performed.

For example, using the display unit 41a and the operation unit 41b of the control device 41 of the automatic winder 4, the operator can clear an alarm generated in the automatic winder 4 or the bobbin transfer device 5, and also can clear an alarm generated in the spinning frame 3. Furthermore, using the display unit 41a and the operation unit 41b of the control device 41 of the automatic winder 4, the operator can set operating conditions of the automatic winder 4 or the bobbin transfer device 5, and also can set operating conditions of the spinning frame 3. As specific examples, using the display unit 41a and the operation unit 41b of the control device 41 of the automatic winder 4, the operator can set a spinning speed, set a blower, reset an alarm, check details of the alarm in the spinning frame 3, and can set a winding speed in the automatic winder 4, for example.

As described in the foregoing, in the yarn winding system 1, the operator can check display related to functions of the bobbin transfer device 5 and the winder units 42 placed under the control of the control device 41 of the automatic winder 4 and can perform operation related to the functions of the bobbin transfer device 5 and the winder units 42 by accessing the display unit 31a and the operation unit 31b of the control device 31 of the spinning frame 3. Similarly, the operator can check display related to functions of the spinning units 32 placed under the control of the control device 31 of the spinning frame 3 and can perform operation related to the functions of the spinning units 32 by accessing the display unit 41a and the operation unit 41b of the control device 41 of the automatic winder 4. This shortens the operator's movement path, and consequently the operating efficiency of the yarn winding system 1 can be prevented from decreasing. This also eliminates the need of additionally providing a dedicated interface unit to each of the spinning frame 3 and the automatic winder 4, and thus costs can be prevented from increasing. By also the yarn winding method performed in the automatic winder 4, the spinning frame 3, and the yarn winding system 1, for the reasons described above, the operating efficiency of the yarn winding system 1 can be prevented from decreasing, and also costs can be prevented from increasing.

In the yarn winding system 1, the display related to the functions of the bobbin transfer device 5 and the winder units 42 includes display for providing notification of the type of a malfunction that has occurred in the bobbin transfer device 5 and the winder units 42, and the display related to the functions of the spinning units 32 includes display for providing notification of the type of a malfunction that has occurred in the spinning units 32. By this configuration, it is possible to notify the operator of the type of a malfunction that has occurred in the spinning units 32, the bobbin transfer device 5, and the winder units 42 while preventing the operator's movement path from becoming longer.

In the yarn winding system 1, the operation related to the functions of the bobbin transfer device 5 and the winder units 42 includes operation for clearing the notification of a malfunction that has occurred in the bobbin transfer device 5 and the winder units 42, and the operation related to the functions of the spinning units 32 includes operation for clearing the notification of a malfunction that has occurred in the spinning units 32. By this configuration, it is possible to allow the operator to clear the notification of a malfunction that has occurred in the spinning units 32, the bobbin transfer device 5, and the winder units 42 while preventing the operator's movement path from becoming longer.

In the yarn winding system 1, the display unit 31a and the operation unit 31b of the control device 31 of the spinning frame 3 are disposed between the spinning units 32 and the winder units 42, and the display unit 41a and the operation unit 41b of the control device 41 of the automatic winder 4 are disposed on a side opposite to the spinning units 32 in the predetermined direction with respect to the winder units 42. By this configuration, the operator can check the display related to the function of the bobbin transfer device 5 disposed between the spinning units 32 and the winder units 42 and can perform the operation related to the function thereof by accessing the display unit 31a and the operation unit 31b of the control device 31 disposed between the spinning units 32 and the winder units 42. Thus, the operator's movement path can be prevented from becoming longer in such a case.

Although one embodiment has been described above, one aspect of the present invention is not limited to the embodiment. For example, the display unit 31a and the operation unit 31b of the control device 31 of the spinning frame 3 may be capable of performing part of display or operation related to the functions of the bobbin transfer device 5 and the winder units 42 placed under the control of the control device 41 of the automatic winder 4, or may be capable of performing all of the display or operation related thereto. Similarly, the display unit 41a and the operation unit 41b of the control device 41 of the automatic winder 4 may be capable of performing part of display or operation related to the functions of the spinning units 32 placed under the control of the control device 31 of the spinning frame 3, or may be capable of performing all of the display or operation related thereto.

In the yarn winding system 1, while the display unit 31a and the operation unit 31b of the control device 31 of the spinning frame 3 may be capable of performing display or operation related to the functions of the bobbin transfer device 5 and the winder units 42 placed under the control of the control device 41 of the automatic winder 4, the display unit 41a and the operation unit 41b of the control device 41 of the automatic winder 4 may be incapable of performing display or operation related to the functions of the spinning units 32 placed under the control of the control device 31 of the spinning frame 3. In other words, in the yarn winding system 1, while a step of causing the display unit 31a and the operation unit 31b of the control device 31 to perform display or operation related to the functions of the bobbin transfer device 5 and the winder units 42 placed under the control of the control device 41 may be performed, a step of causing the display unit 41a and the operation unit 41b of the control device 41 to perform display or operation related to the functions of the spinning units 32 placed under the control of the control device 31 does not have to be performed.

In the yarn winding system 1, while the display unit 31a and the operation unit 31b of the control device 31 of the spinning frame 3 may be incapable of performing display or operation related to the functions of the bobbin transfer device 5 and the winder units 42 placed under the control of the control device 41 of the automatic winder 4, the display unit 41a and the operation unit 41b of the control device 41 of the automatic winder 4 may be capable of performing display or operation related to the functions of spinning units 32 placed under the control of the control device 31 of the spinning frame 3. In other words, in the yarn winding system 1, while a step of causing the display unit 31a and the operation unit 31b of the control device 31 to perform display or operation related to the functions of the bobbin transfer device 5 and the winder units 42 placed under the control of the control device 41 does not have to be performed, a step of causing the display unit 41a and the operation unit 41b of the control device 41 to perform display or operation related to the functions of the spinning units 32 placed under the control of the control device 31 may be performed.

The control device 31 only needs to include at least one of the display unit 31a and the operation unit 31b. The control device 31 may include a first interface unit (e.g., voice input unit) other than the display unit 31a and the operation unit 31b. Similarly, the control device 41 only needs to include at least one of the display unit 41a and the operation unit 41b. The control device 41 may include a second interface unit (e.g., voice input unit) other than the display unit 41a and the operation unit 41b. The display units 31a and 41a may each have a function as an operation unit such as a touch panel.

### Industrial Applicability

According to one aspect of the present invention, it is possible to provide a yarn winding system, an automatic winder, a spinning frame, and a yarn winding method that can prevent operating efficiency from decreasing and can prevent costs from increasing.

### Reference Signs List

1... yarn winding system, 3... spinning frame, 4... automatic winder, 5... bobbin transfer device (second device), 31... control device (first control device), 31a... display unit (first interface), 31b... operation unit (first interface), 32... spinning unit (first device), 41... control device (second control device), 41a... display unit (second interface), 41b... operation unit (second interface), 42... winder unit (second device).

## Claims

1. A yarn winding system comprising:
a spinning frame that forms a yarn feeding bobbin; and
an automatic winder that winds yarn from the yarn feeding bobbin and forms a package, wherein
the spinning frame includes a first control device that controls operation of the spinning frame,
the automatic winder includes a second control device that controls operation of the automatic winder, and
a first interface unit of the first control device is capable of performing display or operation related to a function of a second device placed under control of the second control device.

2. The yarn winding system according to claim 1, wherein a second interface unit of the second control device is capable of performing display or operation related to a function of a first device placed under control of the first control device.

3. The yarn winding system according to claim 2, wherein
the display related to the function of the second device includes display for providing notification of a type of a malfunction that has occurred in the second device, and
the display related to the function of the first device includes display for providing notification of a type of a malfunction that has occurred in the first device.

4. The yarn winding system according to claim 2 or 3, wherein
the operation related to the function of the second device includes operation for clearing notification of a malfunction that has occurred in the second device, and
the operation related to the function of the first device includes operation for clearing notification of a malfunction that has occurred in the first device.

5. The yarn winding system according to any one of claims 2 to 4, wherein the second device includes a bobbin transfer device that transfers the yarn feeding bobbin from the spinning frame to the automatic winder.

6. The yarn winding system according to any one of claims 2 to 5, wherein
the spinning frame further includes a plurality of spinning units, each of the spinning units that forms the yarn feeding bobbin,
the automatic winder further includes a plurality of winder units, each of winder units that winds the yarn from the yarn feeding bobbin and forms the package,
the spinning units are aligned in a row in a predetermined direction,
the winder units are aligned in a row in the predetermined direction on one side with respect to the spinning units in the predetermined direction,
the first interface unit is disposed between the spinning units and the winder units, and
the second interface unit is disposed on a side opposite to the spinning units in the predetermined direction with respect to the winder units.

7. A yarn winding system comprising:
a spinning frame that forms a yarn feeding bobbin; and
an automatic winder that winds yarn from the yarn feeding bobbin and forms a package, wherein
the spinning frame includes a first control device that controls operation of the spinning frame,
the automatic winder includes a second control device that controls operation of the automatic winder, and
a second interface unit of the second control device is capable of performing display or operation related to a function of a first device placed under control of the first control device.

8. An automatic winder that winds yarn from a yarn feeding bobbin supplied from a spinning frame and forms a package, the automatic winder comprising:
a second control device that controls operation of the automatic winder,
a second interface unit of the second control device is capable of performing display or operation related to a function of a first device placed under control of a first control device that controls operation of the spinning frame.

9. A spinning frame that forms a yarn feeding bobbin to be supplied to an automatic winder, the spinning frame comprising
a first control device that controls operation of the spinning frame, wherein
a first interface unit of the first control device is capable of performing display or operation related to a function of a second device placed under control of a second control device that controls operation of the automatic winder.

10. A yarn winding method that is performed in a yarn winding system including a spinning frame that forms a yarn feeding bobbin and an automatic winder that winds yarn from the yarn feeding bobbin and forms a package, the yarn winding method comprising
a step of causing a first interface unit of a first control device that controls operation of the spinning frame to perform display or operation related to a function of a second device placed under control of a second control device that controls operation of the automatic winder.

11. The yarn winding method according to claim 10, further comprising a step of causing a second interface unit of the second control device to perform display or operation related to a function of a first device placed under control of the first control device.

12. A yarn winding method that is performed in a yarn winding system including a spinning frame that forms a yarn feeding bobbin and an automatic winder that winds yarn from the yarn feeding bobbin and forms a package, the yarn winding method comprising
a step of causing a second interface unit of a second control device that controls operation of the automatic winder to perform display or operation related to a function of a first device placed under control of a first control device that controls operation of the spinning frame.
